# FASCICULE DE BREVET EUROPEEN

(11) **EP 1 162 380 B1**
(45) Date de publication et mention de la délivrance du brevet: **31.01.2007**
(21) Numéro de dépôt: 01470008.2
(22) Date de dépôt: 26.03.2001
(51) Int. Cl.: F16D 23/06

(54) **Ensemble synchroniseur pour une transmission de véhicule automobile**
Synchronisiereinrichtung für ein Fahrzeuggetriebe
Synchronizer assembly for a vehicle transmission

(30) Priorité: 06.06.2000 FR 0007192
(43) Date de publication de la demande: 12.12.2001
(73) Titulaire: Peugeot Citroen Automobiles SA, 92200 Neuilly sur Seine (FR)
(72) Inventeur: Wascheul, Michael, 78260 Acheres (FR)
(74) Mandataire: Thinat, Michel

(56) Documents cités:
- FR-A- 2 757 915
- US-A- 4 828 087

## Description

La présente invention concerne un ensemble synchroniseur pour une transmission d'un véhicule automobile.

On sait que le fonctionnement d'un synchroniseur comporte plusieurs phases à partir de la phase de point mort de la transmission, comprenant séquentiellement la phase d'armement, la phase de synchronisation et la phase de crabotage.

L'invention se rapporte plus particulièrement à la phase d'armement du synchroniseur qui consiste à plaquer par friction deux bagues tronconiques de synchronisation situées de part et d'autre du moyeu de synchronisation, respectivement sur des portées tronconiques conjuguées de deux pignons de transmission, préparant ainsi la phase suivante de synchronisation.

Un ensemble synchroniseur selon le préambule de la revendication 1 est connu du document FR-A-2 757 915.

Dans les ensembles synchroniseurs connus, la phase d'armement s'effectue par un jonc d'armement ouvert comportant des portions saillantes, logé et immobilisé en rotation sur le moyeu par lesdites portions saillantes qui sont aptes à coopérer avec des rampes d'armement, généralement au nombre de trois, disposées à l'intérieur du manchon et prenant la place d'une cannelure.

Le but de l'invention est de proposer un ensemble synchroniseur présentant un nouveau système d'armement assurant un bon guidage du jonc, afin d'éviter une usure prématurée de ce dernier, ainsi qu'un passage des vitesses sans craquement.

A cet effet, la présente invention a pour objet un ensemble synchroniseur pour une transmission d'un véhicule automobile, comprenant un moyeu de synchronisation solidaire en rotation d'un arbre mené ; un manchon de crabotage monté sur le moyeu en engrènement avec ce dernier par des cannelures disposées respectivement sur le moyeu et à l'intérieur du manchon et pouvant être déplacé axialement relativement au moyeu par une fourchette de commande ; au moins une bague de synchronisation située au moins à un côté du moyeu de synchronisation ; un pignon de transmission à couronne dentée de crabotage apte à être engagé par friction avec la bague de synchronisation ; et au moins un jonc d'armement élastique ouvert comportant trois portions saillantes équidistantes comprenant chacune un fond relié par deux branches latérales respectivement à trois portions rentrantes, l'une des portions rentrantes étant scindée en deux afin de constituer ladite ouverture du jonc, le manchon de crabotage étant pourvu de trois pavés d'armement central identiques et équidistants disposés à l'intérieur dudit manchon destinés à comprimer le jonc, caractérisé en ce que chacun de ces pavés d'armement est prolongé axialement de chaque côté par un évidement de largeur au moins égale à la largeur du pavé.

Suivant quelques dispositions intéressantes de l'invention:
- la largeur du pavé d'armement est au moins égale à la largeur de trois cannelures du manchon ;
- le moyeu de synchronisation est pourvu sur son secteur denté d'un espace entre deux dents successives de largeur supérieure à la largeur du pavé d'armement constituant ainsi en position de montage un logement pour ce dernier ;
- la bague de synchronisation comporte un secteur denté muni d'un espace entre deux dents de largeur identique à la largeur du logement du pavé d'armement ;
- chaque pavé d'armement est constitué par deux surfaces tronconiques opposées reliées par une surface horizontale, chacune des surfaces tronconiques forme une rampe pour la partie saillante d'un jonc d'armement, disposé en position de montage de manière adjacente à chacun de ces pavés.

Les caractéristiques de l'invention mentionnées ci-dessus, ainsi que d'autres, apparaîtront plus clairement à la lecture de la description suivante d'un exemple de réalisation, en se référant aux dessins annexés sur lesquels :
- la figure 1 est une vue en perspective éclatée de différents éléments de l'ensemble synchroniseur selon la présente invention, et
- la figure 2 est une vue à plus grande échelle, en position de montage d'une partie de l'ensemble synchroniseur.

On a représenté sur les figures, un ensemble synchroniseur 1 pour une transmission d'un véhicule automobile comprenant un moyeu de synchronisation 2 solidaire en rotation d'un arbre mené, non représenté, et comportant un perçage central cannelé 3 en engrènement sur des cannelures correspondantes de l'arbre.

Cet ensemble synchroniseur 1 comprend en outre un manchon de crabotage 4 présentant la forme générale d'une couronne pouvant être déplacé axialement, c'est-à-dire parallèlement à l'arbre, par une fourchette de commande, non représentée, engagée dans une gorge externe 5 du manchon de crabotage 4. Ce dernier comporte également des cannelures internes 6 qui assurent l'engrènement du manchon 4 sur le pourtour du moyeu de synchronisation 2 tout en permettant le déplacement axial du manchon 4 relativement au moyeu 2, qui sera décrit plus en détail ci-après.

L'ensemble synchroniseur 1 comprend au moins une bague de synchronisation 7 située au moins sur un côté du moyeu de synchronisation 2 ; dans le mode de réalisation décrit, une bague est située de chaque côté du moyeu 2 et de façon adjacente à celui-ci. Chacune des bagues de synchronisation 7 peut être déplacée axialement vers le pignon de transmission correspondant, non représenté, adjacent à l'ensemble synchroniseur suivant le sens de déplacement du manchon de crabotage 4 pour engager par friction la bague de synchronisation 7 avec le pignon de transmission.

Chaque bague de synchronisation 7 comporte sur son pourtour trois secteurs dentées 8 situées à l'extérieur du moyeu de synchronisation 2.

L'ensemble synchroniseur comporte en outre deux joncs élastiques ouverts d'armement 9, de façon qu'un déplacement du manchon 4 dans un sens déterminé provoque le déplacement dans le même sens du jonc d'armement correspondant 9 et de la bague de synchronisation associée 7 pour engager par friction la bague 7 avec le pignon de transmission correspondant.

Chaque jonc d'armement 9 comprend trois portions saillantes équidistantes 10 comprenant chacune un fond 11 relié par deux branches latérales 12 respectivement à trois portions rentrantes 13, l'une des portions rentrantes 13 étant scindée en deux afin de constituer ladite ouverture 14 du jonc 9.

Le moyeu de synchronisation 2 comprend trois premiers évidements 15 et trois seconds évidements 16 réalisés sur les bords du pourtour du moyeu 2 qui sont équidistants délimitant ainsi successivement trois secteurs dentés externes de largeur différentes désignés respectivement par les références 17, 18 et 19. On notera que les seconds évidements 16 sont réalisés de manière coaxiale au premier et délimitent en position de montage respectivement un logement pour chaque secteur dentée 8 de chaque bague de synchronisation 7.

De manière identique, les premiers évidements 15 délimitent par leurs parois d'extrémités un logement en position de montage pour les parties saillantes 10 de chaque jonc d'armement 9.

Selon la présente invention, le manchon de crabotage 4 est pourvu de trois pavés d'armement central 20 identiques et équidistants disposés à l'intérieur dudit manchon 4. Chacun de ces pavés d'armement 20 est prolongé axialement de chaque côté par un évidement 21 de largeur au moins égale à la largeur du pavé 20. On notera que avantageusement la largeur de chaque pavé d'armement 20 est au moins égale à la largeur de trois cannelures du manchon 4

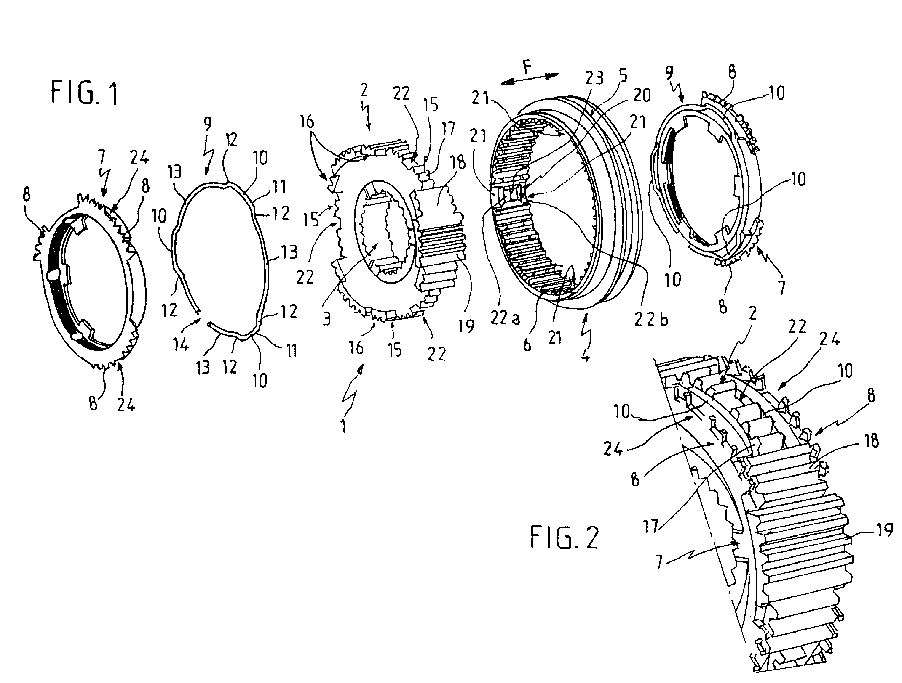

Comme cela ressort mieux de la figure 2, le moyeu de synchronisation 2 est pourvu sur son secteur denté 17 le moins large sensiblement dans sa partie médiane d'un espace 22 entre deux dents successives de largeur supérieure à la largeur du pavé d'armement 20 constituant ainsi en position de montage un logement pour ce dernier.

De même, chaque secteur denté 8 de chaque bague de synchronisation 7 est muni dans sa partie médiane d'un espace 24 entre deux dents de largeur identique à la largeur du logement 22 du pavé 20 formé dans le moyeu de synchronisation 2.

En outre, chaque pavé d'armement 20 est constitué par deux surfaces tronconiques 22a et 22b opposées reliées par une surface horizontale 23. Chacune des surfaces tronconiques 22a, 22b forme une rampe pour la partie saillante d'un jonc d'armement, disposé en position de montage de manière adjacente à chacun de ces pavés de façon qu'un déplacement axial du manchon de crabotage 4 dans le sens correspondant amène les portions de surface tronconiques 22a ou 22b à déplacer axialement le jonc 9.

Le fonctionnement de l'ensemble synchroniseur 1 ressort déjà de la description qui en a été faite ci-dessus et va être maintenant expliqué en relation avec les figures.

Lorsque le manchon de crabotage 4 est déplacé axialement vers l'un quelconque des deux sens, flèche F de la figure 1, par sa fourchette de commande, le jonc d'armement 9 se déplace dans le même sens avec le manchon 4 par les surfaces tronconiques 22a ou 22b des pavés d'armement 20 venant en contact avec les portions saillantes 10 du jonc 9 pour le déplacer et le comprimer axialement.

Ce déplacement du jonc 9 provoque simultanément le déplacement de la bague de synchronisation 7 correspondante entraînant la surface tronconique centrale 24 en contact par friction sur une portée tronconique conjuguée, non représentée, d'un pignon de transmission permettant à ce dernier de tourner avec l'arbre d'entraînement du moyeu 2.

La poursuite du déplacement axial du manchon 4 entraîne le maintien en compression du jonc élastique 9 et le crabotage des dents du manchon ou cannelures avec les dents de la bague de synchronisation, permettant ainsi de synchroniser à la même vitesse de rotation le moyeu 2 et le pignon. Enfin, le manchon de crabotage 4 est déplacé jusqu'à l'engrènement des dents de ce dernier avec les dents d'une couronne de crabotage, non représentée, solidaire du pignon.

Lors de cette dernière phase le pavé d'armement traverse en partie la bague de synchronisation au travers de l'espace 24 qui lui est réservé.

On comprend à la lecture de la description ci-dessus que l'ensemble synchroniseur est simple à réaliser et permet une bon guidage du jonc d'armement lors des phases de crabotage par des surfaces de contact importante et par conséquent d'éviter tout problème d'usure due à des déformations de torsion lors d'un mauvais guidage.

Bien que l'invention ait été décrite en liaison avec un mode de réalisation particulier elle comprend tous les équivalents techniques des moyens décrits. Ainsi, on comprend qu'un tel système d'armement peut s'appliquer à des ensembles synchroniseur comportant plusieurs cônes de friction ou encore à des synchroniseurs à un seul sens de déplacement.

## Revendications

1. Ensemble synchroniseur (1) pour une transmission d'un véhicule automobile, comprenant un moyeu de synchronisation (2) solidaire en rotation d'un arbre mené ; un manchon de crabotage (4) monté sur le moyeu (2) en engrènement avec ce dernier par des cannelures disposées respectivement sur le moyeu et à l'intérieur du manchon et pouvant être déplacé axialement relativement au moyeu (2) par une fourchette de commande ; au moins une bague de synchronisation (7) située au moins à un côté du moyeu de synchronisation (2) ; un pignon de transmission à couronne dentée de crabotage apte à être engagé par friction avec la bague de synchronisation ; et au moins un jonc d'armement élastique ouvert (9) comportant trois portions saillantes équidistantes (10) comprenant chacune un fond (11) relié par deux branches latérales (12) respectivement à trois portions rentrantes (13), l'une des portions rentrantes (13) étant scindée en deux afin de constituer ladite ouverture (14) du jonc (9) le manchon de crabotage (4) étant pourvu de trois pavés d'armement central (20) identiques et équidistants disposés à l'intérieur dudit manchon (4) destinés à comprimer le jonc, **caractérisé en ce que** chacun de ces pavés d'armement (20) est prolongé axialement de chaque côté par un évidement (21) de largeur au moins égale à la largeur du pavé (20).

2. Ensemble synchroniseur selon la revendication 1, **caractérisé en ce que** la largeur du pavé d'armement (20) est au moins égale à la largeur de trois cannelures du manchon (4).

3. Ensemble synchroniseur selon la revendication 1 ou 2, **caractérisé en ce que** le moyeu de synchronisation (2) est pourvu sur son secteur denté (17) d'un espace (22) entre deux dents successives de largeur supérieure à la largeur du pavé d'armement (20) constituant ainsi en position de montage un logement pour ce dernier.

4. Ensemble synchroniseur selon la revendication 3, **caractérisé en ce que** la bague de synchronisation (7) comporte un secteur denté (8) muni d'un espace (23) entre deux dents de largeur identique à la largeur du logement (22) du pavé d'armement (20).

5. Ensemble synchroniseur selon l'une quelconque des revendications précédentes, **caractérisé en ce que** chaque pavé d'armement (20) est constitué par deux surfaces tronconiques (22a et 22b) opposées reliées par une surface horizontale (23) et **en ce que** chacune des surfaces tronconiques (22a, 22b) forme une rampe pour la partie saillante d'un jonc d'armement, disposé en position de montage de manière adjacente à chacun de ces pavés (20).

## Claims

1. Synchronizer assembly (1) for a transmission of a motor vehicle, comprising a synchronizing hub (2) secured in rotation to a driven shaft; a dog clutch sleeve (4) mounted on the hub (2) meshing with the latter via splines arranged respectively on the hub and inside the sleeve, and able to be displaced axially with respect to the hub (2) by a selector fork; at least one synchronizer ring (7) located on at least one side of the synchronizer hub (2); a dog clutch transmission gear able to engage by friction with the synchronizer ring; and at least one open, spring-loaded insert (9) comprising three equidistant projecting portions (10) each comprising a bottom part (11) respectively joined by two side branches (12) to three recessed portions (13), one of the recessed portions (13) being split in two to form said opening (14) of the spring-loaded insert (9), the dog clutch sleeve (4) being provided with three central contact blocks (20) identical and equidistant arranged inside said sleeve (4) and intended to compress the spring-loaded insert, **characterized in that** each of these contact blocks (2) is axially extended on each side by a cut-out (21) of width at least equal to the width of block (20).

2. Synchronizer assembly as in claim 1, **characterized in that** the width of the contact block (20) is at least equal to the width of three splines of the sleeve (4).

3. Synchronizer assembly as in claim 1 or 2, **characterized in that** the synchronization hub (2) is provided on its toothed sector (17) with a space (22) between two successive teeth whose width is greater than the width of the contact block (20) thereby forming, in assembly position, a housing for the latter.

4. Synchronizer assembly as in claim 3 **characterized in that** the synchronizer ring (7) comprises a toothed sector (8) provided with a space (23) between two teeth of identical width to the width of the housing (22) of the contact block (20).

5. Synchronizer assembly as in any of the preceding claims, **characterized in that** each contact block (20) consists of two opposite truncated conical surfaces (22a,22b)joined by a horizontal surface (23), and **in that** each of the truncated conical surfaces (22a,22b) forms a ramp for the projecting part of a spring-loaded insert arranged, in assembly position, so as to be adjacent to each of these blocks (20).

## Patentansprüche

1. Synchronisiereinrichtung (1) für ein Fahrzeuggetriebe, umfassend eine Synchronisiernabe (2), die mit einer getriebenen Welle drehfest verbunden ist; eine Klauenmuffe (4), die auf die Nabe (2) montiert ist, wobei diese durch Nuten im Eingriff mit der letzten ist, die jeweils auf der Nabe und in der Muffe angeordnet sind und die durch eine Steuergabel axial im Verhältnis zur Nabe (2) verschoben werden können; zumindest ein Synchronisierring (7), der sich zumindest an einer Seite der Synchronisiernabe (2) befindet; ein Antriebsritzel mit Klauen-Zahnkranz, der dazu geeignet ist, durch Reibung mit dem Synchronisierring einzugreifen; und zumindest ein elastischer offener Auslösering (9) mit drei abstandsgleichen hervorstehenden Abschnitten (10), die jeweils einen Boden (11) aufweisen, der durch zwei laterale Zweige (12) jeweils mit drei einspringenden Abschnitten (13) verbunden ist, wobei der eine von den einspringenden Abschnitten (13) in zwei Teile gespaltet ist, um die genannte Öffnung (14) des Rings (9) zu bilden, wobei die Klauenmuffe (4) mit drei identischen und abstandsgleichen zentralen Auslöseblöcken (20) versehen ist, die im Inneren der genannten Muffe (4) angeordnet sind, und die dazu vorgesehen sind, den Ring zu drücken, **dadurch gekennzeichnet, dass** jeder von diesen Auslöseblöcken (20) an jeder Seite axial durch eine Aussparung (21) verlängert ist, deren Breite zumindest der Breite des Blocks (20) entspricht.

2. Synchronisiereinrichtung nach Anspruch 1, **dadurch gekennzeichnet, dass** die Breite des Auslöseblocks (20) zumindest der Breite von drei Nuten der Muffe (4) entspricht.

3. Synchronisiereinrichtung nach Anspruch 1 oder 2, **dadurch gekennzeichnet, dass** die Synchronisiernabe (2) an ihrem Zahnsegment (17) mit einem Raum (22) zwischen zwei sukzessiven Zähnen versehen ist, dessen Breite größer als die Breite des Auslöseblocks (20) ist, wodurch er somit in der Montageposition eine Lagerstelle für diesen Auslöseblock bildet.

4. Synchronisiereinrichtung nach Anspruch 3, **dadurch gekennzeichnet, dass** der Synchronisierring (7) ein Zahnsegment (8) aufweist, das mit einem Raum (23) zwischen zwei Zähnen versehen ist, dessen Breite mit der Breite der Lagerstelle (22) vom Auslöseblock (20) übereinstimmt.

5. Synchronisiereinrichtung nach einem der vorhergehenden Ansprüche, **dadurch gekennzeichnet, dass** jeder Auslöseblock (20) aus zwei gegenüberliegenden kegelstumpfförmigen Flächen (22a und 22b) gebildet ist, die durch eine horizontale Fläche(23) verbunden sind, und **dadurch**, dass jede der kegelstumpfförmigen Flächen (22a, 22b) eine Rampe für den hervorstehenden Teil eines Auslöserings bildet, der in Montageposition derart angeordnet ist, dass er an jeden dieser Blöcke (20) angrenzt.
